# EUROPEAN PATENT APPLICATION

(11) **EP 3 051 738 A1**
(43) Date of publication of application: **03.08.2016**
(21) Application number: 15305136.2
(22) Date of filing: 30.01.2015
(51) Int. Cl.: H04L 5/00, H04W 48/12

(54) **METHOD FOR MONITORING A USER EQUIPMENT SPECIFIC SEARCH SPACE, USER EQUIPMENT, A NODE AND A COMPUTER PROGRAM PRODUCT**

(71) Applicant: ALCATEL LUCENT, 92100 Boulogne-Billancourt (FR)
(72) Inventor: LIM, Seau Sian, Swindon, Wiltshire SN5 7DJ (GB); WONG, Shin Horng, Swindon, Wiltshire SN5 7DJ (GB)
(74) Representative: Bryers LLP

(57) **Abstract**

A low cost/complexity (LC) user equipment (UE) in a connected mode of operation with a node of a wireless telecommunication network, the node operable to schedule the transmission of unicast messages using a low complexity physical downlink control channel (LC-PDCCH), wherein the LC-UE is configured to monitor the LC-PDCCH UE-specific search space (USS) at all times other than within a predefined period.

## Description

### TECHNICAL FIELD

Aspects relate, in general, to a method for monitoring a user equipment specific search space, user equipment, a node and a computer program product.

### BACKGROUND

Wireless telecommunications systems are known. In a cellular system, radio coverage is provided to user equipment, for example, mobile phones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink channels. Information and data transmitted by user equipment to the base station occurs on channels of radio carriers known as uplink channels. Although the deployment of base stations is largely controllable by the network operator, the deployment of user equipment is not. The deployment of user equipment within the network can cause unexpected consequences. For example, a certain class of low cost and/or complexity UEs, such as machine type communication UEs for example, may be deployed in high attenuation areas, and may have other constraints that cause issues for a node that is trying to communicate with them.

### SUMMARY

According to an example, there is provided a low cost/complexity (LC) user equipment (UE) in a connected mode of operation with a node of a wireless telecommunication network, the node operable to schedule the transmission of unicast messages using a low complexity physical downlink control channel (LC-PDCCH), wherein the LC-UE is configured to monitor the LC-PDCCH UE-specific search space (USS) at all times other than within a predefined period. That is, there is a period that is known to a node, such as an eNB, of the network where the UE does not monitor LC-PDCCH in the USS. The LC-UE can be a machine type communication (MTC) UE. The LC-UE can transmit data representing the start and/or duration of the predefined period to the node. The LC-UE can transmit data representing the start and end of the predefined period to the node. The LC-UE can transmit data representing the predefined period to the node using a physical control channel or in a MAC message.

According to an example, there is provided a method, in a wireless telecommunication network in which a low cost/complexity (LC) user equipment (UE) is operable in a connected mode of operation with a node of the network that is operable to schedule the transmission of unicast messages using a low complexity physical downlink control channel (LC-PDCCH) for the LC-UE, the method comprising configuring a predefined period within which the LC-UE does not monitor the LC-PDCCH UE-specific search space (USS). That is, a prededined period is configured, that is known to a node, such as an eNB, of the network where the UE does not monitor LC-PDCCH in the USS. Data representing the start and/or duration of the predefined period can be transmitted for receipt by the node. For example, the LC-UE can transmit the data. Data representing the start and end of the predefined period can be transmitted for receipt by the node. Data representing the start of the predefined period can be transmitted for receipt by the node in the event that a repetition for data transmissions for the LC-UE exceed a predefined threshold value. The node can, on the basis of the received data, transmit a rejection message to LC-UE. Data for the LC-UE can be scheduled via the USS within the predefined period.

According to an example, there is provided a node, in a wireless telecommunication network, in which a low cost/complexity (LC) user equipment (UE) is operable in a connected mode of operation with the node, the node being operable to schedule the transmission of unicast messages using a low complexity physical downlink control channel (LC-PDCCH) for the LC-UE, wherein the node is operable to receive a message from the LC-UE indicating a predefined period within which the LC-UE will not monitor the LC-PDCCH UE-specific search space (USS). The node can receive data representing the start and/or duration of the predefined period from the LC-UE. The node can receive data representing the start and end of the predefined period from the LC-UE. The node can receive data representing the predefined period over a physical control channel or in a MAC message.

According to an example, there is provided a computer program product, comprising a computer usable medium having computer readable program code embodied therein, said computer readable program code adapted to be executed to implement a method as provided herein.

### BRIEF DESCRIPTION OF THE DRAWINGS

Embodiments will now be described, by way of example only, with reference to the accompanying drawings, in which:
Figure 1 is a schematic representation of a MAC subheader and MAC CE for an indicator according to an example;
Figure 2 is a schematic representation of signaling according to an example; and
Figure 3 is a schematic representation of a portion of a wireless telecommunication network according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

User equipment (UE) can be deployed in areas suffering from high attenuation. This high attenuation can cause the UE to be unable to decode downlink configuration information, which is essential for being able to access appropriate downlink traffic. This means that when deployed in these areas of high attenuation, the UE is effectively unable to receive traffic from the base station. Existing standards fail to provide an adequate technique for providing this downlink configuration information in high attenuation deployments, which means that UE implementing those standards are unable to communicate with the network during such deployment.

Whilst this is inconvenient for some UE when located in these high attenuation areas, coverage may be restored when the UE moves to a lower attenuation area. However, there is a class of UE (such as low cost and/or complexity machine type communication (MTC) devices such as, for example, smart meters) which are immobile once installed; for those user equipment no or limited network coverage is provided.

Existing solutions target a 15-20 dB coverage improvement for such devices. Repetition of a message at the physical layer is one technique providing such coverage improvement. In order to achieve a 20 dB improvement, the theoretical number of repetitions needed is 100 times more than currently used. In reality, this amount of repetition is likely going to need to be even higher due to imperfect channel estimation, fading, frequency error, etc. Although repetition is a simple way to improve the coverage, it is highly inefficient in utilizing the spectrum especially when the amount of repetitions is very high (in the hundreds).

For low cost/complexity UE, such as MTC UE for example, a downlink control channel can be based on EPDCCH where the EPDCCH is located in a specific subband. Unlike a legacy UE, an LC-UE is not expected to receive simultaneous broadcast and unicast messages and hence the UE may not be able to monitor EPDCCH in the USS (UE Specific Search Space) for possible scheduling info for unicast messages when it is reading the system information (SI) or decoding the EPDCCH on the CSS.

A node, such as an eNB, with which the LC-UE is in a connected mode of operation does not know when the UE would read the SI (or other common messages) and hence the eNB may schedule DCI via the USS whilst the UE is reading SI (or decoding the EPDCCH in the CSS). For normal coverage, the eNB would thus waste a marginal resource in scheduling EPDCCH in USS and the corresponding PDSCH if these are scheduled when the UE reads the SI (or other common messages) and this is easily recovered by retransmitting of the EPDCCH and PDSCH. However, in a coverage enhanced mode, which is particularly relevant for an LC-UE that may be deployed in a high attenuation location as noted above, where the EPDCCH and PDSCH would occupy a lot of resources, such wastage is no longer marginal.

For an LC-UE, such as an MTC UE for example, there will typically be no simultaneous reception of broadcast and unicast expected.

According to an example, a period that is known to the eNB is defined, in which a UE does not monitor EPDCCH in the USS. The period where the UE cannot monitor EPDCCH in the USS is referred to as USS-DRX herein. This allows the eNB to avoid scheduling anything via the USS during USS-DRX since the UE will not be able to decode it. The eNB can alternatively schedule unicast message to the UE in the CSS since if CSS is used, the UE would monitor this in order to obtain scheduling information of common messages such as SI.

In an embodiment, the USS-DRX period is indicated by the UE. For example, the UE can transmit data representing the start and/or duration of the predefined period to the node, and in the form of one or more indicators.

That is, the indicator can be a "Start of USS-DRX period" message and a "Stop of USS-DRX period" message. Prior to the start of the USS-DRX period the UE can send an indicator to a node (e.g. a 1 bit indicating that it will start the USS-DRX period in the next X subframes, where X can be predefined) followed by a stop indicator after the end of the USS-DRX period.

In an example, a timer can be started at the node after receipt of the USS-DRX period indicator, and once the timer expires the eNB can assume that the USS-DRX period has ended. This timer can help avoid the case where the eNB fails to receive the stop USS-DRX indicator thereby preventing the eNB from scheduling to the UE via USS.

In another example, the USS-DRX period indicator consists of the duration of the USS-DRX period. That is the UE will inform the eNB of the actual duration in which it cannot monitor USS. This avoids the need to send a 2nd "stop" indicator after the end of the USS-DRX period. This is useful if the UE knows exactly (or approximately) how long it takes to read the SI (or other common messages).

In another example, the USS-DRX period indicator can be sent over the physical control channel (e.g. PUCCH). Alternatively, to improve the reliability of the indicator, the USS-DRX period indicator can be sent as a (or part of a) message over the medium access control (MAC) layer as a MAC Control Element (CE) or a MAC subheader. If the indicator is sent as a MAC subheader, the 8-bit subheader will consist of a new LC_ID (6-bits) and the remaining 2 bits can be used for indicating start and stop or the number of BCCH modification period of decoding the SI. If MAC CE is included for the MAC subheader, further information can be sent (e.g. the repetition level for reading SI etc.).

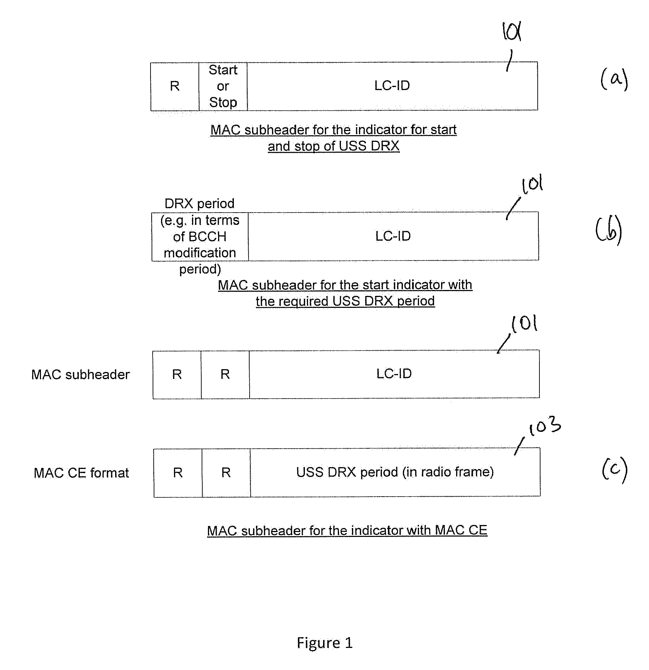

Figure 1 is a schematic representation of a MAC subheader and MAC CE for an indicator according to an example. In figure 1, three variations for a MAC subheader and MAC CE are depicted. That is, a MAC subheader includes an LC_ID 101 for the LC-UE in question, and the two remaining bits can specify the start or stop of the USS-DRX period (a), or the duration of the USS-DRX period (b) such as in terms of the number of BCCH modification period for example. The MAC CE (c) can indicate the USS-DRX period 103.

In an example, if the SI modification period is short (i.e. as per legacy system), then the USS-DRX is implied whenever the eNB indicates a change in SI in a SI modification period. That is when a SI change is made, the eNB would assume that the UE would read the SI during the current SI modification period (and/or the next modification period) and the eNB would therefore refrain from scheduling any USS EPDCCH during this SI modification period. This method does not require a USS-DRX indicator but it would waste resources since the entire SI modification period cannot schedule USS EPDCCH to UE in coverage enhanced mode. This may not be feasible if the SI modification period is very long. It should be noted that in 3GPP for power consumption reduction purposes, the SI modification period has been proposed to increase to several hours or 1 day. Hence, it may be preferred to use the USS-DRX indicator.

In another example, the eNB can reject the UE USS-DRX period. Such a rejection can be made, for example, if the eNB has important information that needs to be scheduled via USS to the UE. A rejection can be sent from the node to the UE after reception of the USS-DRX indicator from the UE.

In another example, a repetition threshold can be defined where the UE only need to send a USS-DRX indicator if the UE repetition level is above this threshold. This repetition threshold can also be used for the implied USS-DRX period, where this implied USS-DRX period is only imposed on UE at repetition level above this threshold, i.e., the eNB can schedule EPDCCH via USS to UE with repetition level below this repetition threshold.

Although the USS-DRX period is aimed at UE in coverage enhancement, it should be appreciated that it can also be used in normal coverage.

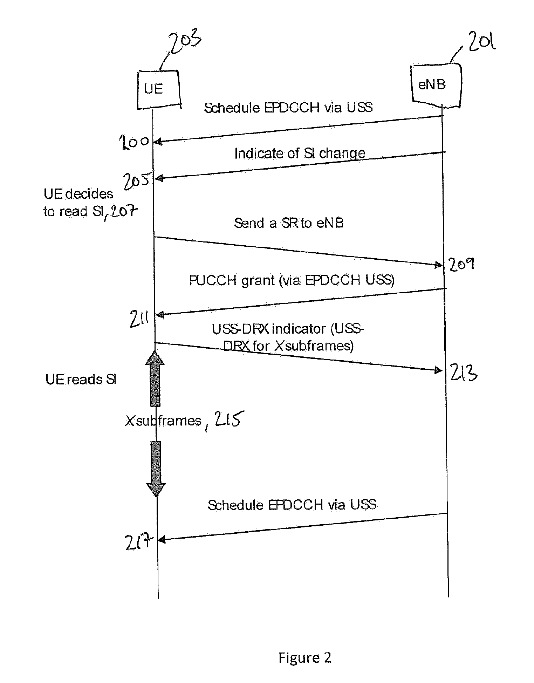

Figure 2 is a schematic representation of signaling according to an example. A node, eNB 201 can schedule 200 unicast messages to the UE 203 via EPDCCH USS. The eNB 201 then indicates (205) that there is a change in SI, as is typically well known. After receiving message 205 there is a change in SI, the UE 203 decides to read the SI (207).

The UE 203 firstly sends an SR to the eNB 201 via PUCCH (209). The eNB 201, in response to the SR, gives an uplink grant for the UE 203 using EPDCCH in USS (211). The UE 203 then sends a MAC message indicating that it will start USS-DRX for X subframes (213). It should be appreciated that if the UE already has a PUSCH grant, it can piggy back this MAC message onto the PUSCH message.

The eNB 201 receiving this MAC message would refrain from scheduling EPDCCH in USS to this UE 203 since it knows that this UE 203 will not be able to read the EPDCCH.

After X-subframes (215) the USS-DRX period ends and the eNB (201) can once again schedule EPDCCH in the USS for this UE 203 (217).

Accordingly, an eNB can avoid scheduling EPDCCH in USS to a UE in coverage enhanced mode when this UE is reading a common message.

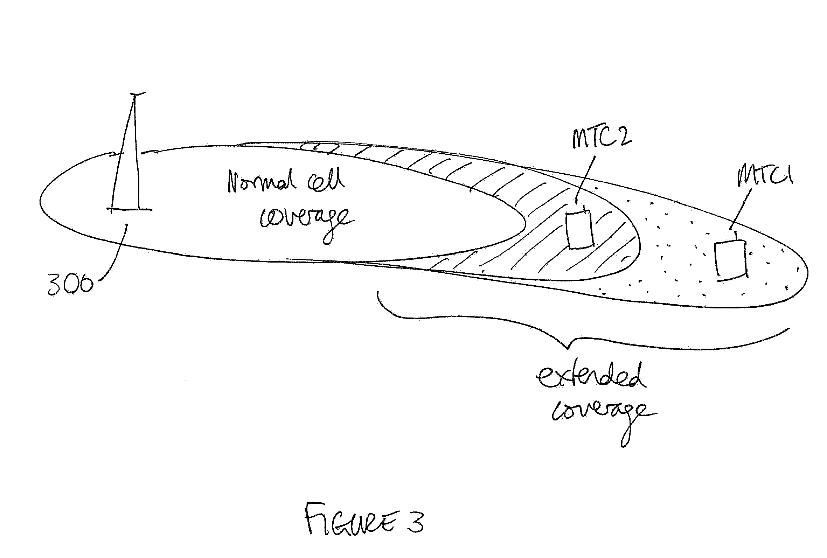

Figure 3 is a schematic representation of a portion of a wireless telecommunication network according to an example. A network node 300, such as an eNB provides coverage for a cell which consists of the existing (termed as 'normal') coverage and the targeted coverage extension (due to for example, an MTC UE device located at the cell edge such as in a basement).

For those UE devices in the normal coverage, no additional coverage enhancement is required. For those devices in the extended coverage region as shown Figure 3, not all devices require as much as 20 dB coverage extension. Some devices (e.g. MTC 2 located in the region shaded in Figure 1) will require coverage extension that is less than 20 dB and hence a message to/from these devices would require less repetitions compared to a MTC device in the 20 dB region.

As an example, in Figure 3, MTC1 requires a 20 dB improvement and MTC2 requires a 13 dB coverage improvement, so the number of repetitions for MTC2 is 4 times less than that of MTC1. The amount of resource saving from using less than the maximum number of repetitions for MTC2 is significant since the maximum number of repetitions is large (i.e. in the hundreds), thereby improving spectral efficiency significantly. Hence, providing different levels of coverage extension for MTC devices is desirable. Also, different channels will experience different levels of attenuation and so will require different numbers of repetitions in each coverage extension region. As noted, optimizing the number of repetitions to the UE radio condition for data channel such as PDSCH and PUSCH is highly beneficial for power consumption and spectral efficiency. Furthermore, reducing an overhead associated with signaling a change in repetition rate is advantageous. Accordingly, an efficient method that does not contribute to network overhead for indicating the number of repetitions for PDSCH and PUSCH is provided.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A low cost/complexity (LC) user equipment (UE) in a connected mode of operation with a node of a wireless telecommunication network, the node operable to schedule the transmission of unicast messages using a low complexity physical downlink control channel (LC-PDCCH), wherein:
the LC-UE is configured to monitor the LC-PDCCH UE-specific search space (USS) at all times other than within a predefined period.

2. An LC-UE as claimed in claim 1, wherein the LC-UE is operable to transmit data representing the start and/or duration of the predefined period to the node.

3. An LC-UE as claimed in claim 1, wherein the LC-UE is operable to transmit data representing the start and end of the predefined period to the node.

4. An LC-UE as claimed in any preceding claim, wherein the LC-UE is operable to transmit data representing the predefined period to the node using a physical control channel or in a MAC message.

5. A method, in a wireless telecommunication network in which a low cost/complexity (LC) user equipment (UE) is operable in a connected mode of operation with a node of the network that is operable to schedule the transmission of unicast messages using a low complexity physical downlink control channel (LC-PDCCH) for the LC-UE, the method comprising:
configuring a predefined period within which the LC-UE does not monitor the LC-PDCCH UE-specific search space (USS).

6. A method as claimed claim 5, further comprising transmitting data representing the start and/or duration of the predefined period for receipt by the node.

7. A method a claimed in claim 5, further comprising transmitting data representing the start and end of the predefined period for receipt by the node.

8. A method a claimed in claim 5, further comprising transmitting data representing the start of the predefined period for receipt by the node in the event that a repetition for data transmissions for the LC-UE exceed a predefined threshold value.

9. A method as claimed in any of claims 6 to 8, wherein the node is operable, on the basis of the received data, to transmit a rejection message to LC-UE.

10. A method as claimed in claim 9, further comprising scheduling data for the LC-UE via the USS within the predefined period.

11. A node, in a wireless telecommunication network, in which a low cost/complexity (LC) user equipment (UE) is operable in a connected mode of operation with the node, the node being operable to schedule the transmission of unicast messages using a low complexity physical downlink control channel (LC-PDCCH) for the LC-UE, wherein the node is operable to receive a message from the LC-UE indicating a predefined period within which the LC-UE will not monitor the LC-PDCCH UE-specific search space (USS).

12. A node as claimed in claim 11, wherein the node is operable to receive data representing the start and/or duration of the predefined period from the LC-UE.

13. A node as claimed in claim 11, wherein the node is operable to receive data representing the start and end of the predefined period from the LC-UE.

14. A node as claimed in claim 11, wherein the node is operable to receive data representing the predefined period over a physical control channel or in a MAC message.

15. A computer program product, comprising a computer usable medium having computer readable program code embodied therein, said computer readable program code adapted to be executed to implement a method as claimed in any of claims 5 to 10.
